(19) Europäisches Patentamt
European Patent Office
Office européen des brevets

(11) **EP 4 327 059 B1**

(12) **FASCICULE DE BREVET EUROPEEN**

(45) Date de publication et mention
de la délivrance du brevet:
**14.01.2026 Bulletin 2026/03**

(21) Numéro de dépôt: **22722864.0**

(22) Date de dépôt: **20.04.2022**

(51) Classification Internationale des Brevets (IPC):
**G01K 13/08** *(2006.01)* **B23K 20/12** *(2006.01)*
**H04Q 9/00** *(2006.01)*

(52) Classification Coopérative des Brevets (CPC):
**B23K 20/125; G01K 13/08; H04Q 9/00;**
H04Q 2209/40

(86) Numéro de dépôt international:
**PCT/FR2022/050735**

(87) Numéro de publication internationale:
**WO 2022/223923 (27.10.2022 Gazette 2022/43)**

(54) **ÉLECTROBROCHE ÉQUIPÉE D'UN DISPOSITIF DE MESURE DE TEMPÉRATURE, ET MACHINE COMPRENANT UNE TELLE ÉLECTROBROCHE**

ELEKTRISCHE SPINDEL MIT EINER TEMPERATURMESSVORRICHTUNG, UND MASCHINE MIT EINER SOLCHEN SPINDEL

ELECTRIC SPINDLE PROVIDED WITH A TEMPERATURE MEASURING DEVICE, AND MACHINE COMPRISING SUCH ELECTRIC SPINDLE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **22.04.2021 FR 2104213**

(43) Date de publication de la demande:
**28.02.2024 Bulletin 2024/09**

(73) Titulaire: **Institut Maupertuis**
**35170 Bruz (FR)**

(72) Inventeur: **GUILLO, Mario**
**35136 ST-JACQUES DE LA LANDE (FR)**

(74) Mandataire: **Regimbeau**
**20, rue de Chazelles**
**75847 Paris Cedex 17 (FR)**

(56) Documents cités:
**CN-U- 204 109 152      FR-A1- 3 045 426**
**JP-A- 2019 042 761      KR-A- 20120 055 035**
**US-A1- 2018 178 293**

**Description**

DOMAINE DE L'INVENTION

L'invention concerne les électrobroches, notamment les électrobroches de soudage par friction-malaxage, et plus particulièrement une électrobroche et une machine comprenant une telle électrobroche, voir les revendications 1 et 14.

ETAT DE LA TECHNIQUE

Les alliages d'aluminium à durcissement structural ou par écrouissage sont utilisés dans l'automobile, l'aérospatial et le domaine naval. Mais ils sont difficilement soudables par fusion. Le rivetage reste donc employé malgré les nombreux inconvénients qu'il présente (jonction hétérogène, surcroit de masse, concentration de contraintes au niveau des alésages).

Une autre technique réside dans le soudage par friction-malaxage (ou *friction stir welding* (FSW) en anglais) inventé par l'organisme britannique The Welding Institute (TWI) en 1991 (voir la demande WO 93/10935). Le principe est de réaliser un cordon de soudure en malaxant la matière des pièces à assembler. La liaison se forme à chaud mais en dessous de la température de fusion du matériau, permettant ainsi d'éviter les défauts liés à la solidification et de diminuer les contraintes résiduelles au niveau du joint. Ce procédé peut être employé sur les alliages dit "à bas point de fusion" (aluminium, cuivre, magnésium) et permet de réaliser des soudures hétérogènes. Les pièces à assembler sont mises en position sans jeu, sur une enclume et bridées afin d'éviter tout mouvement relatif au cours de l'opération de soudage.

L'outil de soudage FSW est animé d'un mouvement de rotation et d'avance le long de la ligne de joint. Il est constitué de deux parties, à savoir un épaulement qui chauffe la matière par friction au contact de la surface des pièces à souder et un pion qui malaxe la matière afin de créer une jonction entre les pièces.

Le FSW permet de contourner les problèmes liés aux techniques d'assemblage pour les structures en aluminium et autres alliages dits à bas point de fusion. Bien que des recherches existent pour le soudage FSW de matériau à plus haut point de fusion (acier, titane, etc.), il est quasiment employé uniquement pour le soudage de l'aluminium, en tout cas de manière industrielle. L'inconvénient majeur du FSW est que c'est un procédé dit « en contact ». Le contact « outil/pièce » est un générateur d'effort important, dépendant des paramètres de soudage, des épaisseurs et des nuances des matériaux soudés.

Il est donc nécessaire d'avoir une machine capable de supporter les efforts impliqués. Elle doit être équipée d'une électrobroche adéquate afin d'apporter le couple et de résister aux efforts du procédé. L'électrobroche est l'interface entre la machine et l'outil qu'elle porte et met en rotation. Ses caractéristiques de précision, de puissance et de couple en font l'organe clé de la machine.

Les typologies de machine

Aujourd'hui, on distingue principalement deux typologies.

Une première typologie est formée par la machine FSW de type portique : ce sont des machines généralement réalisées sur demande, très rigides et permettant de souder des épaisseurs importantes. Les machines les plus capacitives sont en mesure de supporter des charges de 150 kN de poussée axiale. On peut ainsi souder des pièces ayant une épaisseur allant jusqu'à 50 mm. Les freins principaux sont le coût d'investissement (dépassant le million d'euros), le délai de fabrication (de 1 à 2 ans pour les machines importantes), la faible hauteur sous tête limitant la hauteur des pièces et les faibles angles de soudage possibles limitant les capacités de soudage 3D.

Une deuxième typologie est formée par les robots industriels. Les robots à fortes charges sont intéressants pour les applications à épaisseurs fines et les soudures 3D. Ils sont plutôt dédiés à des applications ne nécessitant pas une précision extrême car, la rigidité du robot n'étant pas celle d'une machine cartésienne (de type portique par exemple, ayant des déplacements par translation par opposition aux rotations d'un robot), l'outil dévie compte tenu des efforts de soudage. Les robots les plus capacitifs peuvent supporter jusqu'à 10 kN de poussée axiale, et sont une alternative économiquement intéressante avec un délai rapide de fabrication du robot. On parle d'un rapport d'investissement de 2 à 10 par rapport à une machine portique.

Le soudage à épaulement fixe (SSFSW)

Il est connu de dissocier l'outil FSW en deux parties, le pion étant tournant et l'épaulement fixe. Ce procédé est nommé soudage par épaulement fixe (ou en anglais *Stationary Shoulder FSW* ou SSFSW). Ce procédé a de nombreux avantages, notamment une meilleure qualité de surface de soudage que le FSW classique et une robustesse accrue notamment sur des trajectoires complexes en 3D. Son inconvénient réside dans la complexité des outils, que ce soit en conception et en réalisation. Il tend à prendre le pas sur le FSW. Combiné à un robot, ce procédé offre des perspectives intéressantes.

### Électrobroche robotisée hautes performances

Aujourd'hui on recherche des électrobroches adaptables de façon universelle. En effet, de plus en plus d'utilisateurs sont amenés à réaliser des fonctions annexes au soudage FSW/SSFSW, comme de l'usinage.

Dans les trois cas, le premier critère recherché est la compacité. En effet, l'encombrement ne doit pas diminuer la capacité nominale du robot au niveau de sa charge. Un robot industriel possède une courbe de charge qui définit sa capacité de charge en fonction du porte-à-faux qu'il embarque sur son poignet. Plus ce porte-à-faux est long, plus le robot perd en capacité de charge. En termes de procédé, cela implique une perte de performances, car plus la capacité de charge est faible, moins le robot soude épais et moins il soude vite. Cela engendre des déviations de l'outil également plus grandes, ainsi que des phénomènes vibratoires plus importants à cause d'une perte de rigidité de l'ensemble. Enfin, avoir un volume important en bout du bras de robot limite l'accessibilité dans un outillage (par exemple en raison de la présence d'éléments de bridage des plaques de part et d'autre de la zone à souder).

### Un paramètre de soudage : la température

Les procédés de soudage FSW et SSFSW sont gouvernés généralement avec quatre paramètres d'entrée : la vitesse de rotation, la vitesse d'avance, l'angle d'inclinaison de l'outil le long du joint et l'effort de pression de l'outil sur la pièce. Le mode de pilotage par l'effort (ou contrôle de l'effort de forge) est plus robuste que le mode de pilotage par la position de l'outil, car il permet de compenser les tolérances de fabrication des pièces et les jeux de mise en position des pièces dans un outillage.

Une électrobroche de soudage FSW/SSFSW doit donc être équipée d'un système de mesure d'effort (a minima une mesure de l'effort axial) pour qu'on puisse la contrôler de manière précise.

La gestion de ces paramètres permet d'apporter une énergie de soudage suffisante pour créer une jonction entre les pièces. Cette énergie est reliée à la température qui règne au cœur du cordon de soudure. Ainsi une maitrise de la température à un niveau constant durant l'opération permettrait de garantir un niveau de qualité constant, et ce quelles que soient les conditions ou les phénomènes de diffusion thermique des pièces.

Il y a alors deux possibilités.

Soit on effectue une mesure de la température (boucle ouverte). Cela permet de faire du contrôle non destructif en définissant une fenêtre de température. Une température trop faible ou trop haute sera synonyme d'une soudure non conforme. Soit on contrôle de la température (boucle fermée). On réalise alors une boucle de régulation afin de contrôler la température pour qu'elle reste la plus constante possible. Ainsi la vitesse de rotation par exemple ne serait plus constante mais deviendrait une variable du système d'asservissement. Cela pourrait être l'effort également. On peut ainsi connaitre les scénarios suivants : si la température est trop haute, on baisse la vitesse de rotation. Si la température est trop basse, on augmente la vitesse de rotation.

Une difficulté réside dans la mesure de la température dans l'outil de soudage qui est tournant. Une électronique doit en effet être embarquée sur le système rotatif lié à l'outil de soudage (porte-outil, outil ou arbre mécanique) et réaliser le conditionnement du signal.

Le document FR-3 045 426 (décrivant le préambule de la revendication 1) divulgue une tête de soudage par friction-malaxage comprenant un thermocouple pour mesurer une température au voisinage de l'arbre tournant. Le thermocouple s'étend dans la partie fixe de la tête, jusqu'à un roulement de l'arbre.

Un tel agencement a pour inconvénient que la mesure de la température ne se fait pas directement dans la partie tournante. La température relevée au niveau du roulement résulte de la chaleur transmise avec retard par conduction depuis l'outil via l'arbre. Le pilotage en température est donc nécessairement imprécis.

Les documents JP 2019 042761 et CN 204 109 152 divulguent une électrobroche comprenant :

- un carter,
- une partie tournante montée rotative par rapport au carter, et
- des moyens de transmission de signal sans fil entre la partie tournante et le carter.

Un but de l'invention est donc d'améliorer le pilotage de l'électrobroche en température.

## EXPOSE DE L'INVENTION

La présente invention propose une électrobroche telle que définie dans la revendication 1, comprenant :

- un carter,
- une partie tournante montée rotative par rapport au carter,
  la partie tournante présentant un logement de réception d'un porte-outil, la partie tournante comprenant au moins un connecteur agencé sur une face externe de la partie tournante et configuré pour la réception d'un signal, et
- des moyens de transmission sans fil entre la partie tournante et le carter du signal venant du connecteur.

L'invention a pour avantage de ne pas nécessiter l'installation d'un organe tel qu'un boitier en partie basse de l'électrobroche pour la mesure de la température et l'envoi du signal. L'électrobroche est donc peu encombrante. Cela permet d'avoir un dégagement complet de la zone de travail, permettant à l'utilisateur de parfaitement visualiser le soudage. Aucune pièce supplémentaire autre que l'outil n'est à prévoir, que l'on soit en mode FSW, SSFSW ou usinage.

De plus, il n'y a pas de problématique d'équilibrage. Les éléments précités étant installés à demeure dans l'électrobroche, l'équilibrage est réalisé avec le système déjà embarqué lors du montage de l'électrobroche. Cette question d'équilibrage est particulièrement importante en présence d'une partie tournant à grande vitesse de sorte que le moindre déséquilibre de masse est susceptible d'engendrer l'apparition d'un balourd lors du fonctionnement.

Par ailleurs, cette solution est universelle. L'utilisateur peut soit mettre un outil avec un thermocouple qu'il connecte par exemple au connecteur, soit souder sans mesure de température. Autrement dit, soit il branche un thermocouple, soit il n'en branche pas. Comme le système est à demeure dans l'électrobroche, une partie des moyens de transmission sans fil formée par exemple par une carte fixe est toujours alimentée. Aucun démontage ou remontage n'est à prévoir.

Enfin, le ou les connecteurs sont situés au plus près de la sortie d'un câble du porte-outil pour limiter la longueur de câble et fournir une configuration optimale en fonctionnement, notamment en haute vitesse.

On peut prévoir que les connecteurs sont au nombre de deux.

On peut prévoir que les moyens de transmissions sans fil ont une forme annulaire.

Avantageusement, les connecteurs sont disposés symétriquement par référence à un axe principal de la partie tournante.

De la sorte, on donne une symétrie à l'agencement et on évite l'apparition de balourds. Le porte-outil peut alors comporter également deux trous pour le passage des câbles, réduisant ainsi les défauts d'équilibrage pouvant provenir de l'ensemble porte-outil/outil. Ces trous permettent de le connecter aux deux connecteurs si l'utilisateur souhaite mettre deux thermocouples pour des besoins spécifiques.

On peut prévoir que le ou chaque connecteur est équipé d'un ressort à lame.

Cela permet d'éviter un quelconque desserrage des câbles à haute vitesse de rotation.

Avantageusement, les moyens de transmission comprennent un élément rigidement solidaire de la partie tournante et situé plus près d'une première extrémité axiale de la partie tournante opposée au logement que d'une deuxième extrémité axiale de la partie tournante présentant le logement.

Ces moyens étant ainsi situés dans la zone arrière ou supérieure de l'électrobroche, il y a aucun risque de les endommager. Cette zone est exempte de poussière, et on est très loin de la zone de soudage, ce qui évite les problèmes thermiques également. De plus, si on utilise l'électrobroche en mode usinage, on peut alors sans problème le faire sous microlubrification (en anglais *micro quantity lubrification* ou MQL). On peut prévoir que la partie avant de l'électrobroche est pressurisée par air pour empêcher la remonté d'impuretés.

Avantageusement, les moyens de transmission comprennent :

- un élément fixe rigidement solidaire du carter,
- un élément tournant rigidement solidaire de la partie tournante, et
- des moyens d'alimentation par induction de l'élément tournant.

Conformément à l'invention, l'électrobroche comprend un porte-outil reçu dans le logement, le porte-outil comprenant un thermocouple connecté au connecteur.

Avantageusement, l'électrobroche comprend un outil et un mandrin portant le thermocouple et vissé dans une cavité de l'outil.

Cela permet d'avoir un système compact qui s'intègre parfaitement dans un outil. Le support forme un pot fileté et permet de régler de manière adéquate la position du thermocouple dans l'outil et de s'affranchir de la longueur de la gaine du thermocouple.

On peut prévoir que le thermocouple s'étend dans un conduit de l'outil présentant un diamètre inférieur à un plus petit diamètre de la cavité.

L'outil comporte donc un trou très faible en avant de l'outil pour ne pas le fragiliser d'un point de vue mécanique. Cela permet de placer le thermocouple le plus près possible du noyau soudé sans fragiliser l'outil.

Dans un mode de réalisation, le conduit débouche à l'extérieur de l'électrobroche. Dans un autre mode de réalisation, le conduit peut ne pas être débouchant. La gaine du thermocouple arriverait donc en butée. Mais cela complexifie la fabrication car réaliser un conduit de petit diamètre sur une grande longueur est difficile.

Avantageusement, le thermocouple présente un diamètre inférieur ou égal à 3 mm et de préférence inférieur ou égal à 0,5 mm.

Un critère important est en effet le choix du diamètre du thermocouple, ainsi que le mode de soudure chaude choisi. Plus le diamètre du thermocouple est fin, plus la réactivité sera importante. De plus, une soudure chaude reliée à la masse permet également de gagner en réactivité. Le temps est divisé par 10 entre une gaine de 0,5 mm et 1,5 mm. Une gaine de 0,25 mm serait encore meilleure. Avoir la soudure chaude à la masse permet un gain de 33 % de performance.

On peut prévoir que le porte-outil comprend un corps principal et un pion formant une partie externe de l'outil distincte du corps, le pion étant par exemple en carbure.

L'invention a pour avantage d'être universelle. Elle peut être appliquée sur les outils de soudage SSFSW, et ce dans des matériaux de pion différents. En effet, généralement, les outils de soudage sont réalisés en acier à outil permettant une fabrication relativement aisée. En revanche, pour certaines applications (par exemple pour la soudure d'aluminium à haute limite élastique), le matériau du pion d'extrémité de l'outil peut être différent de celui du reste de l'outil et choisi avec de meilleures caractéristiques mécaniques. On parle d'un outil hybride car seule la partie fonctionnelle est dans ce matériau. L'obtention d'un trou central est standard. Elle peut être réalisée lors de la fabrication de l'outil par frittage lorsque le matériau du pion est si dur que le percer est quasi impossible.

Dans un mode de réalisation, l'électrobroche forme une électrobroche de soudage par friction-malaxage, par exemple comprenant un épaulement externe monté fixe par rapport au carter ou dépourvue d'épaulement externe monté fixe par rapport au carter.

On prévoit également selon l'invention une machine comprenant une électrobroche selon l'invention.

DESCRIPTION DES FIGURES

Nous allons maintenant présenter un mode de réalisation de l'invention à titre d'exemple non-limitatif à l'appui des dessins sur lesquels :

- les figures 1 à 3 sont des vues en perspective, de dessous et en coupe axiale d'une électrobroche selon un mode de réalisation de l'invention ;

- la figure 4 est une vue à plus grande échelle d'une partie de l'électrobroche de la figure précédente ;

- les figures 5 et 6 sont des vues analogues à la figure 3 montrant l'électrobroche équipée d'un outil dans une configuration à épaulement tournant ;

- la figure 7 est une vue d'une extrémité de l'outil dans une variante de réalisation;

- la figure 8 est une vue analogue à la figure 6 montrant l'électrobroche équipée d'un outil dans une configuration à épaulement fixe ;

- les figures 9 et 10 sont des vues en coupe axiale de l'électrobroche montrant des détails du circuit de refroidissement ;

- la figure 11 est une vue illustrant le principe de fonctionnement de l'électrobroche lors d'une opération de friction-malaxage ;

- les figures 12 et 13 illustrent un capteur de force de l'électrobroche ;

- les figures 14 et 15 sont des vues de dessous et en élévation de l'électrobroche montrant la position des repères ;

- les figures 16 et 17 sont des vues de la machine avec l'électrobroche des figures précédentes et son robot lors d'une opération de calibration durant la mise en œuvre du procédé de l'invention ;

- les figures 18 et 19 sont des vues en perspective illustrant deux configurations des organes de calibration de la machine ; et

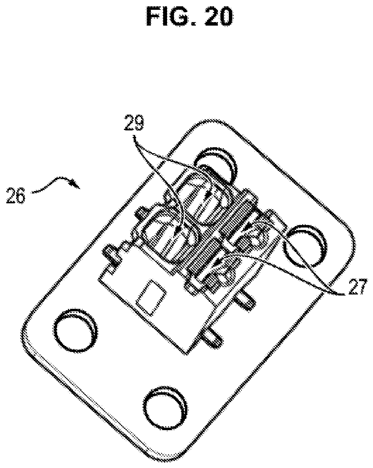

- la figure 20 est une vue en perspective de l'un des connecteurs de l'électrobroche.

Nous allons décrire en référence aux figures un mode de réalisation d'une électrobroche selon l'invention.

## Présentation générale

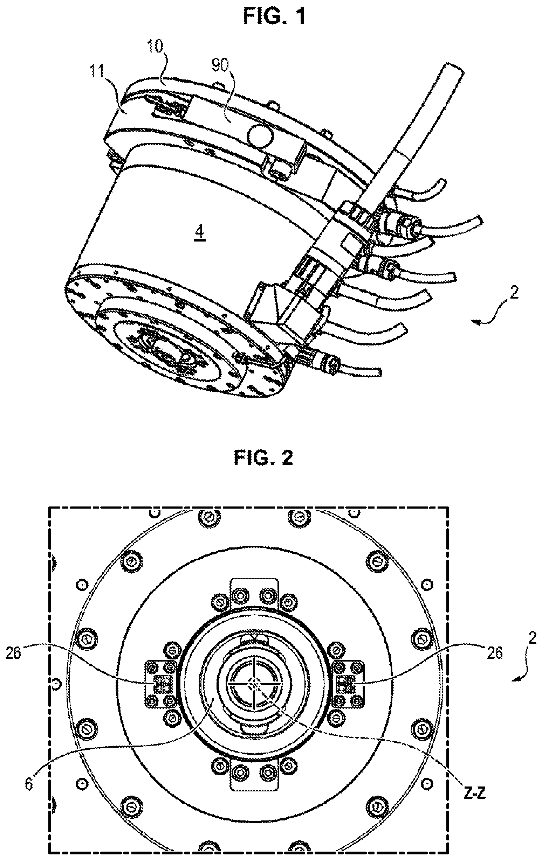

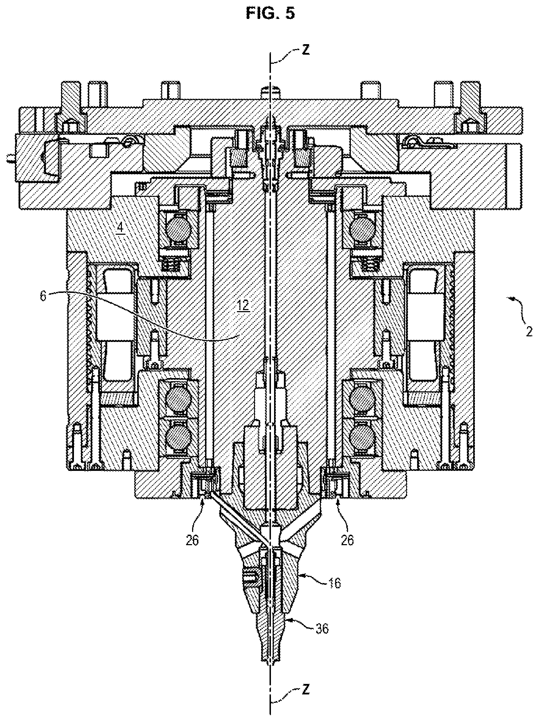

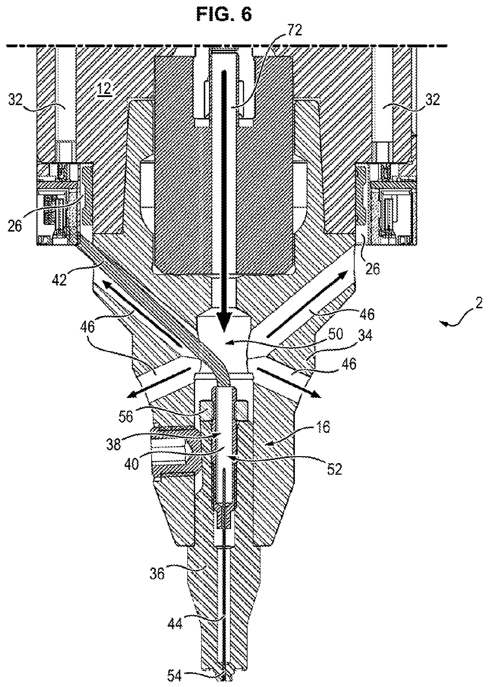

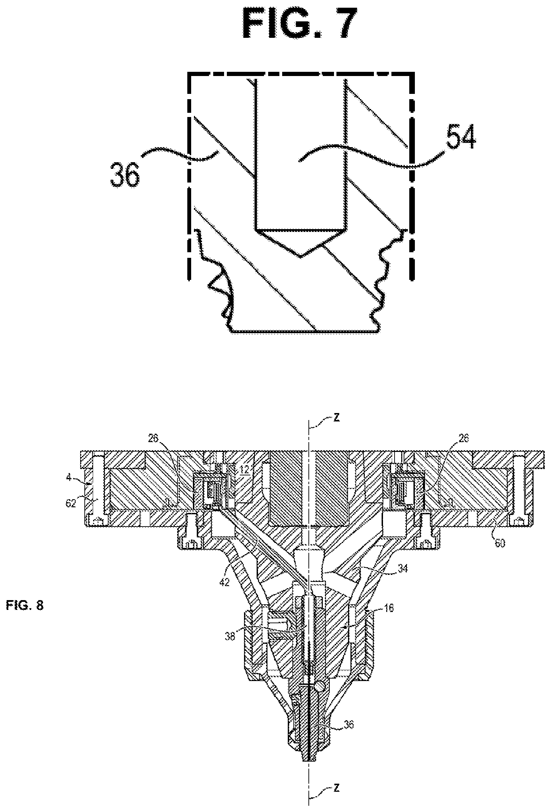

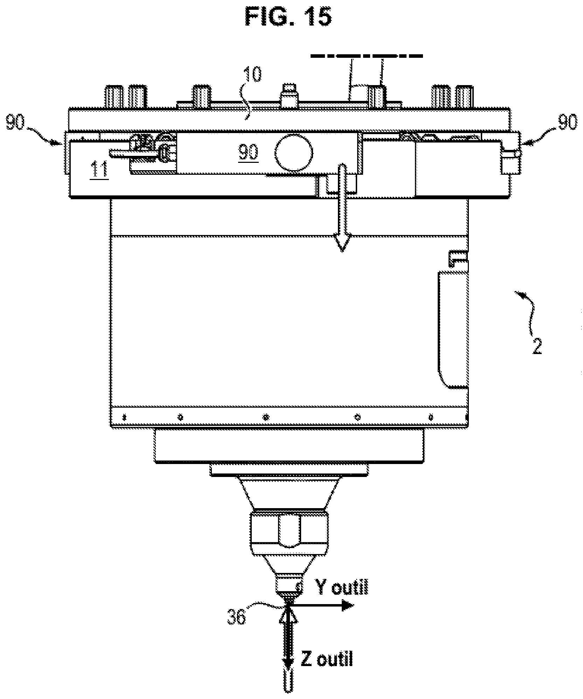

L'électrobroche 2 dépourvue d'outil est représentée sur les figures 1 à 4, 9 et 10. La même électrobroche 2 équipée d'un outil et dans une configuration à épaulement tournant est illustrée sur les figures 5 et 6. La même électrobroche 2 équipée d'un outil et dans une configuration à épaulement fixe est illustrée aux figures 8 et 14 à 17.

## Mesure de la température en mode à épaulement tournant

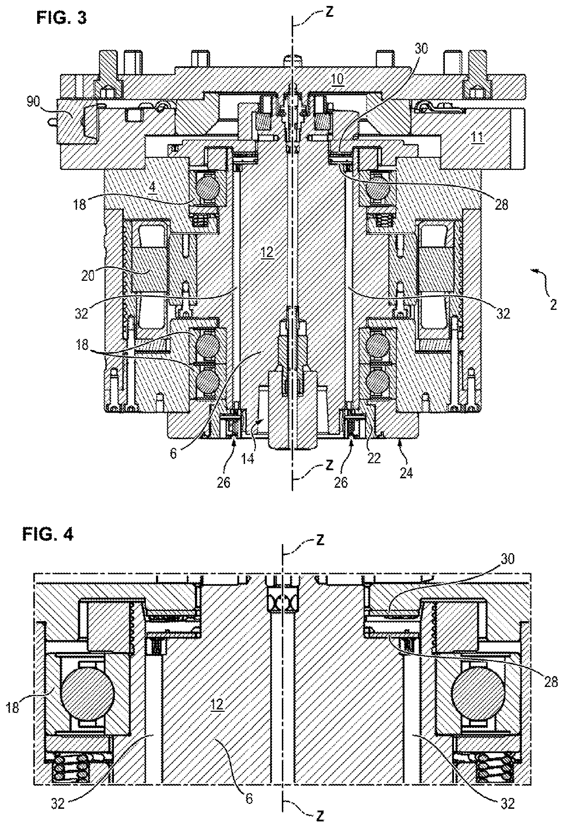

En référence notamment à la figure 3, l'électrobroche comprend un carter 4 et une partie tournante 6 montée rotative par rapport au carter autour d'un axe, le plus souvent vertical, Z-Z qui constitue un axe principal de l'électrobroche.

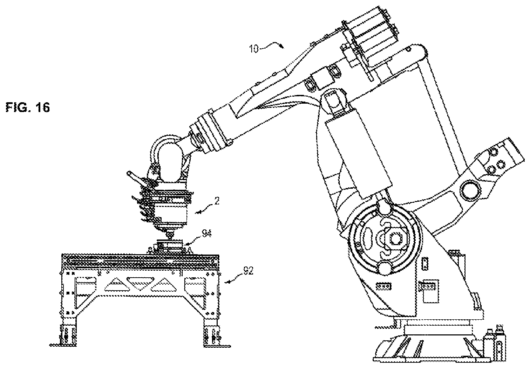

Une partie supérieure du carter est en l'espèce constituée par une plaque d'interface du robot 10 visible à la figure 16, formant un socle et destinée à porter l'électrobroche. Elle est reliée à une autre partie 11 du carter, formant un support de la partie tournante, par une liaison rotule traversée par l'axe Z-Z.

La partie tournante 6 comprend un arbre 12 qui présente à son extrémité axiale inférieure un logement 14 de réception d'un porte-outil 16. Lorsque le porte-outil est reçu dans le logement, il est rendu rigidement solidaire de l'arbre par des moyens de fixation classiques qui ne seront pas détaillés ici de sorte qu'il tourne d'un seul bloc avec la partie tournante.

L'électrobroche comprend des paliers en l'espèce au nombre de trois et formés par des roulements à billes 18 montés en « O » pour le support et le guidage du mouvement de rotation de la partie tournante 6 par rapport au carter 4. Dans le présent exemple, deux des roulements sont situés en partie basse de l'arbre et le troisième est situé en partie haute de l'arbre.

L'électrobroche comprend un moteur électrique 20 apte à mettre l'arbre en rotation par rapport au carter.

La partie tournante 6 comprend en l'espèce un flasque inférieur 22 rigidement fixé à une extrémité axiale inférieure de l'arbre 12. Le flasque est de forme annulaire de sorte qu'il présente un évidement central laissant accès à cette extrémité, notamment au logement 14 depuis l'extérieur de l'électrobroche. Le flasque 22 présente une face externe inférieure plane 24 perpendiculaire à l'axe Z-Z. Le flasque est entouré par un chapeau annulaire 23 rigidement solidaire du carter.

Le flasque 22 comprend deux connecteurs 26 agencés sur la face externe du flasque et configurés pour la réception d'un signal électrique ou électronique. Ils sont disposés symétriquement de part et d'autre de l'axe Z-Z. Chaque connecteur 26 est équipé d'un ressort à lame 27, en l'espèce au nombre de deux, afin de pouvoir recevoir deux câbles dans deux emplacements respectifs 29 du connecteur. Pour l'utiliser, on actionne le ressort 27 par exemple au moyen d'un tournevis, on introduit un câble dans l'emplacement 29 correspondant et on relâche le ressort pour bloquer le câble dans le connecteur.

L'électrobroche comprend des moyens de transmission sans fil entre la partie tournante 6 et le carter 4 du signal venant de chaque connecteur. Ces moyens comprennent une carte électronique 28 de forme annulaire, rigidement solidaire de la partie tournante. Dans le présent exemple, la carte est logée sur un épaulement ménagé en partie supérieure de l'arbre, qui s'étend en regard du carter. La carte 28 est agencée de sorte que son alimentation en courant électrique se fait par induction en raison du mouvement de la partie tournante de sorte que cette carte ne nécessite pas de batterie.

Les moyens de transmission comprennent aussi une carte électronique annulaire 30 rigidement solidaire du carter et coaxiale à la carte 28. Elle s'étend en regard de l'épaulement de sorte que la carte 28 tourne devant la carte 30 du carter lors de la rotation de l'arbre.

On observe donc que ces moyens se trouvent à l'intérieur de l'électrobroche et plus près d'une extrémité axiale supérieure de l'arbre que de son extrémité axiale inférieure présentant le logement 14.

Le transfert du signal est réalisé en mode sans fil de la carte tournante 28 vers la carte fixe 30. La carte fixe 30 est alimentée par une tension continue ou alternative depuis la machine, et le transfert de l'alimentation vers la carte tournante 28 se fait par induction, évitant ainsi l'utilisation d'une pile d'alimentation dans la partie tournante. Il est préférable d'avoir une distance comprise entre 4 et 8 mm afin d'assurer un bon fonctionnement du système d'induction. Il n'y a donc pas de maintenance et le système peut fonctionner 24h/24.

L'arbre 12 présente deux conduits rectilignes 32 s'étendant chacun suivant une direction parallèle à l'axe Z-Z, à distance de ce dernier. Les conduits s'étendent des connecteurs respectifs 26 à la carte 28 de l'arbre. Ils logent des câbles non représentés reliant chaque connecteur à la carte 28.

Les figures 5 et 6 illustrent un porte-outil 16 reçu dans le logement 14. Le porte-outil comprend un support formé ici par un mandrin 34 qui porte un outil 36 à son extrémité axiale inférieure. Le manchon s'étend à l'extérieur en saillie du flasque suivant la direction axiale Z-Z. De même, l'outil 36 s'étend à l'extérieur en saillie du mandrin 34 suivant la même direction.

Le porte-outil 16 comprend un thermocouple 38. Le thermocouple comprend un corps principal 40 portant à une extrémité axiale supérieure un câble 42 et à une extrémité axiale inférieure opposée une gaine allongée 44.

Le câble 42 traverse un conduit latéral 46 du mandrin de sorte qu'il sort du porte-outil, à l'extérieur de l'électrobroche en regard du flasque 22. Le câble 42 à son extrémité libre peut être connecté à l'un des connecteurs 26 du flasque 22.

L'outil 36 est par exemple réalisé en carbure de tungstène ou en acier. Il a lui aussi une forme générale cylindrique. Il présente ainsi en partie supérieure une cavité taraudée 50 dans laquelle est vissée une partie filetée du corps 40 du thermocouple. Le thermocouple est ainsi rigidement fixé à l'outil. Le taraudage à l'arrière de l'outil permet de régler la position du thermocouple ainsi équipé d'un pot fileté et de s'affranchir de la longueur de la gaine ou des erreurs de tolérances (longueur de l'outil 36 par exemple). La jonction entre la gaine du thermocouple et le câble est réalisée dans le pot fileté. Un écrou 56 à l'arrière permet de bloquer la position du thermocouple.

La gaine 44 du thermocouple s'étend dans un premier conduit 52 de l'outil faisant suite à la cavité 50 puis, à l'extrémité axiale inférieure de l'outil, dans un deuxième conduit 54 ou conduit terminal présentant un diamètre inférieur à un plus petit diamètre de la cavité 50. Le diamètre de ce deuxième conduit 54 est ici juste suffisant pour permettre le passage du capteur du thermocouple. Ce conduit s'étend dans le pion de l'outil destiné à être dans la matière lors du soudage. En l'espèce, ce conduit terminal débouche à l'extérieur de l'électrobroche. Un tel conduit de diamètre très faible en avant de l'outil permet de ne pas le fragiliser tout en plaçant le thermocouple au plus près du noyau soudé.

Le capteur du thermocouple présente un diamètre inférieur ou égal à 3 mm et de préférence inférieur ou égal à 0,5 mm. Plus le diamètre du thermocouple est fin, plus la réactivité est importante. De plus, un choix d'une soudure chaude reliée à la masse permet également de gagner en réactivité. Ici le diamètre de la gaine du thermocouple fait 0,5 mm. Le tableau ci-dessous montre le temps de réponse associé. Le temps est divisé par 10 entre une gaine de 0,5 mm et 1,5 mm. Le fait d'avoir la soudure chaude à la masse permet un gain de 33 % de performance supplémentaire. [TUne gaine de 0,25 mm serait encore meilleure, mais est plus complexe à réaliser mécaniquement et exposée à une fragilité de la jonction.

Tableau : temps de réponse selon le diamètre de la gaine

| Diamètre (mm) | Temps de réponse (s) |
|---|---|
| 0,25 | 0,015 |
| 0,5 | 0,03 |
| 1,0 | 0,15 |
| 1,5 | 0,3 |
| 2,0 | 0,4 |

Tableau : temps de réponse selon le mode de soudure

| | Diamètre (mm) | Temps (s) 63,2 % | Temps (s) 90 % |
|---|---|---|---|
| Soudure chaude isolée | 0,25 | 0,015 | 0,050 |
| | 0,5 | 0,030 | 0,082 |
| Soudure chaude à la masse | 0,25 | 0,007 | 0,033 |
| | 0,5 | 0,020 | 0,060 |

En variante, comme illustré à la figure 7, le conduit terminal 54 de l'outil 36 peut ne pas être débouchant. La gaine du thermocouple peut donc arriver en butée mécanique. Mais cela complexifie la fabrication car réaliser un conduit borgne de petit diamètre sur une grande longueur est difficile.

Généralement, les outils de soudage sont réalisés en acier à outil permettant une fabrication aisée. Souvent le manchon 34 peut être d'une seule pièce avec l'outil 36. En revanche, pour certaines applications (aluminium à haute limite élastique par exemple), le matériau du pion formant l'outil 36 peut être dans une nuance avec des meilleures caractéristiques mécaniques que le porte-outil 34. C'est le cas en l'espèce où l'outil de soudage 36 est divisé en deux pièces mécaniques : pion et porte-pion, le pion venant s'insérer dans le porte-pion. On parle d'un outil hybride car seule la partie fonctionnelle est en carbure. L'avantage est que l'obtention d'un trou central est complètement standard et réalisée au frettage (percer un matériau de type carbure est très difficile, car c'est un matériau très dur). Ce trou peut suivant les besoins être rebouché une fois la gaine du thermocouple mise en place, à l'aide par exemple d'un ciment thermique d'étanchéité pouvant monter à des hautes températures (>600°C).

Les deux connecteurs 26 permettent à l'utilisateur de relier deux thermocouples (par exemple un dans l'outil de soudage et un autre dans le mandrin). Comme ils sont à demeure fixés à l'arbre, il n'est pas nécessaire de refaire périodiquement un équilibrage en rotation. La symétrisation des deux connecteurs 26 améliore naturellement le défaut d'équilibrage (ce qui ne serait pas le cas avec un seul connecteur).

Ces éléments du système de mesure de la température s'intègrent complètement dans l'électrobroche et la rendent extrêmement compacte.

Dans ce mode de réalisation, il s'agit d'une électrobroche hautes performances industrielles ultra-compacte pour une utilisation à la fois dans un milieu de recherche et pour de la production en grandes séries, compatible FSW, SSFSW et usinage, avec ou sans mesure de température. On peut en effet notamment étendre ce principe si l'on souhaite mesurer la température dans des fraises d'usinage.

Dans cette électrobroche de friction-malaxage, l'outil 36 monté dans le mandrin 34 illustré à la figure 6 présente un épaulement externe monté tournant par rapport au carter.

### Mode à épaulement fixe

On a illustré à la figure 8 la même électrobroche cette fois en configuration à épaulement fixe. On retrouve l'électrobroche 2, le porte-outil 16, le mandrin 34 et l'outil 36 avec tous leurs organes comme sur les figures précédentes.

Cette fois l'électrobroche porte en outre un capotage ou porte-épaulement 60 venant recouvrir toute la partie inférieure de l'électrobroche, notamment le flasque tournant 22, y compris le mandrin 34 et la plus grande partie de l'outil 36. Ce capotage 60 est rigidement fixé au carter en l'espèce par des vis 62. Dans le présent exemple, il n'est pas fixé directement au chapeau 23. Il doit être mis en place après la réception du mandrin 34 et de l'outil 36 sur la broche et la connexion du ou des câbles de thermocouple aux connecteurs 26 du flasque. Le capotage n'est pas en contact direct avec le porte-outil 16, car un intervalle d'air est ménagé entre eux, en regard de toute la surface externe du porte-outil et du flasque tournant 22. C'est ce capotage qui forme l'épaulement fixe à son extrémité axiale inférieure dont émerge l'extrémité tournante de l'outil 36.

On peut observer que les charges perçues par l'épaulement fixe transitent directement par le carter ou bâti de l'électrobroche sans passer par le flasque ni par l'arbre puisqu'il n'y pas d'appui direct sur la bague extérieure des roulements avant, ce qui procure une grande robustesse à l'ensemble.

On voit donc que cette solution pour la mesure de la température est universelle et peut être appliquée sur les outils de soudage FSW et SSFSW, et ce dans des matériaux de pion différents.

### Sur le joint tournant

On va maintenant présenter le circuit de refroidissement de l'électrobroche 2.

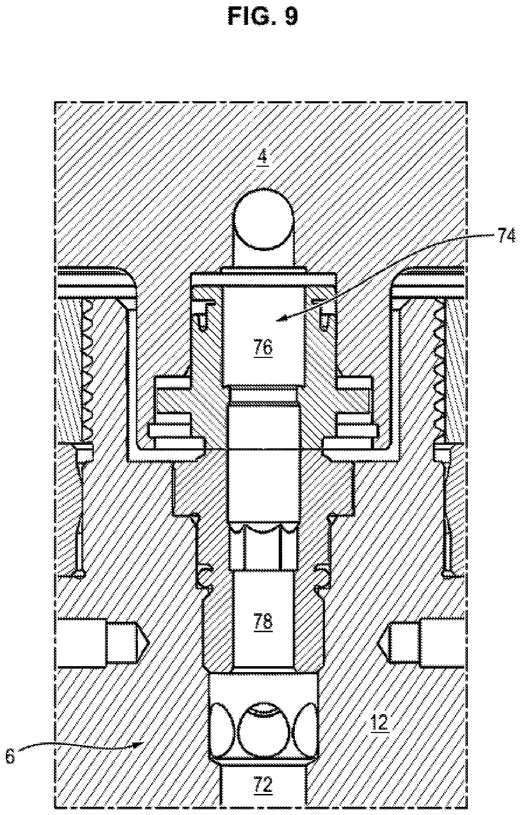

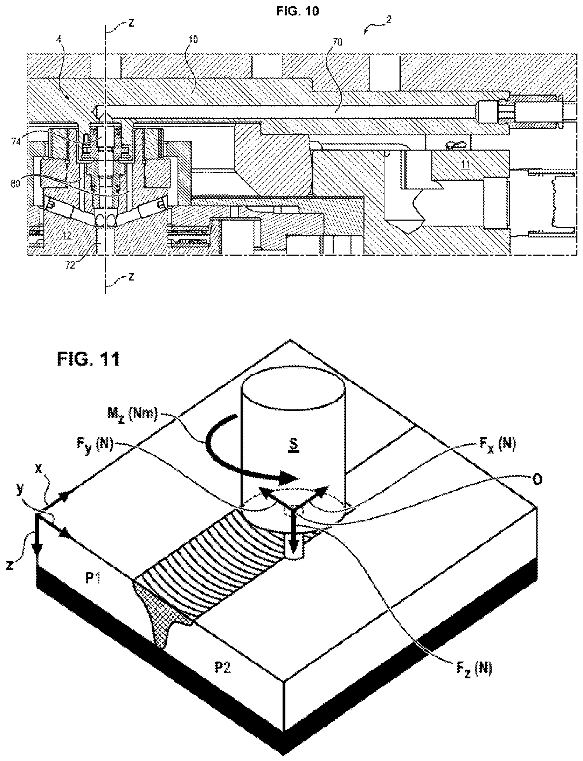

En référence aux figures 9 et 10, le carter 4 comprenant un conduit de refroidissement 70, en l'espèce rectiligne et horizontal. L'arbre 12 comprend lui aussi au moins un conduit de refroidissement 72, en l'espèce rectiligne et vertical, centré sur l'axe Z-Z et débouchant à son extrémité axiale inférieure dans le logement 14 du porte-outil comme on le voit aux figures 5 et 6.

L'électrobroche 2 comprend un joint tournant 74 comportant une partie supérieure fixe 76 rigidement solidaire du carter 4 et une partie inférieure tournante 78 rigidement solidaire de l'arbre 12, le joint mettant en communication de fluide le conduit 70 du carter et le conduit 72 de l'arbre. C'est dans l'interface de robot 10 que s'étendent la partie du joint 76 solidaire du carter et le conduit de refroidissement 70 de ce dernier. Cela permet d'être très compact, la partie fixe du joint tournant faisant partie de l'interface 10, il n'y a pas de pièce supplémentaire à prévoir. Le joint tournant est de type universel. Il permet de transférer un fluide (tel que de l'air, du lubrifiant ou un fluide de microlubrification qui est un mélange air/huile) de l'élément fixe vers l'élément tournant. Les deux parties du joint frottent l'une sur l'autre afin de garantir une étanchéité dynamique, sans fuite ou perte quelconque. On garantit avec ce système l'amenée d'un fluide vers la zone avant de l'électrobroche avec une étanchéité à 100%. Tous les roulements de l'électrobroche sont situés hors du joint, ce dernier étant dépourvu de roulement. Le joint tournant 74 est par exemple celui commercialisé par la société Deublin sous la référence 1101-632-343.

Comme illustré à la figure 10, l'arbre 12 comprend en outre des conduits de drainage 80, ici au nombre de six, s'étendant depuis une face supérieure axiale de l'arbre située en regard du carter jusqu'au conduit de refroidissement 72 de l'arbre. Deux de ces conduits sont visibles sur la figure 10. Chaque conduit de drainage 80 forme ici un coude et comprend un premier tronçon rectiligne vertical débouchant en partie supérieure sur la face supérieure de l'arbre en regard du carter et un tronçon incliné dont l'extrémité inférieure débouche dans le conduit de refroidissement 72. Les conduits de drainage 80 permettent l'écoulement du fluide par gravité par le passage central de l'arbre. Cela évite l'utilisation d'un câble de drainage spécifique et contraignant en matière d'encombrement. Ces conduits évacuent du fluide qui se trouverait à l'interface entre la partie fixe 76 du joint tournant et sa partie rotative 78 (ce qui évite l'accumulation d'un fluide de type huile dans la zone supérieure).

En référence notamment à la figure 6, le mandrin 34 du porte-outil comprend des conduits d'évacuation 46, en l'espèce au nombre de quatre et rectilignes, en communication de fluide en amont avec le conduit de refroidissement 72 de l'arbre et en aval avec l'environnement extérieur de l'électrobroche. La communication en aval se fait sans passer par l'arbre ni par le carter. Les termes « amont » et « aval » sont pris par référence à la direction du flux de fluide de refroidissement. Les conduits d'évacuation 46 ont ici chacun une extrémité aval qui débouche sur une face externe du mandrin. L'un de ces conduits est occupé par le câble 42 du thermocouple.

En l'espèce, les conduits d'évacuation 46 communiquent chacun directement avec le conduit de refroidissement 72. Les conduits d'évacuation 46 et le conduit de refroidissement se coupent en un même point. Deux des conduits d'évacuation 46 s'étendent vers le bas, donc en direction opposée à l'électrobroche à partir du conduit de refroidissement 72. Les deux autres conduits d'évacuation 46 s'étendent vers le haut en direction de l'électrobroche à partir du conduit de refroidissement.

La machine comprend un organe non-illustré pour l'alimentation du conduit de refroidissement 70 du carter avec un fluide de refroidissement.

Le fluide, tel que de l'air, arrive donc par le centre de l'arbre. Le système de serrage du porte-outil sur l'arbre (par exemple tel que celui commercialisé sous la référence HSK 63 par la société Semar, qui forme une prise d'attache normalisée et standardisé des porte-outils), permet de délivrer l'air de manière étanche jusqu'au niveau du porte-outil. Les conduits d'évacuation 46 de ce dernier permettent de faire circuler l'air et de l'évacuer hors de l'électrobroche. On pourrait imaginer un porte-outil 34 équipé d'un labyrinthe de refroidissement, pour réaliser un refroidissement convectif d'une grande surface d'échange sur le porte-outil, ce qui serait encore plus efficace. Le principe reste le même.

Ces éléments sont valables quel que soit le mode de fonctionnement, soudage FSW et SSFSW, comme on le voit sur la figure 8, ou usinage. Selon les modes d'utilisation, le fluide de refroidissement est de l'air ou un liquide tel qu'un liquide de lubrification. Dans l'électrobroche en effet, tous les modes sont possibles : fonctionnement à sec, avec de l'air, avec de la microlubrification voire même de la lubrification. L'utilisateur n'a pas à se poser de question quant à la pérennité du fonctionnement. En mode usinage, cet agencement permet de réaliser une arrivée de liquide jusqu'à l'outil, voire jusqu'à l'arrête de coupe de l'outil (comme le prévoit la société HAIMER, avec un mandrin équipé de la technologie cooljet par exemple) pour une microlubrification, pour un usinage plus efficient, des économies de lubrifiant et une zone plus propre.

Mesure des efforts

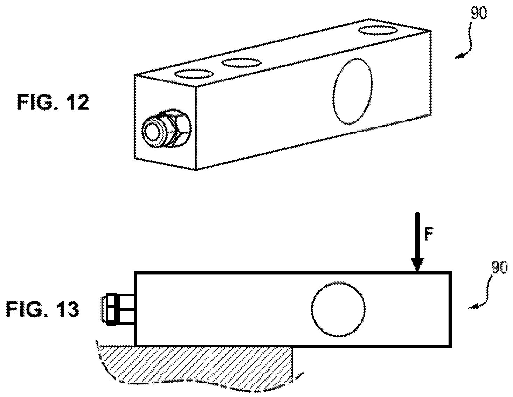

Comme illustré aux figures 1, 3, 5 et 12 à 15, l'électrobroche 2 comprend des capteurs d'effort 90, ici au nombre de trois. Chaque capteur 90 est interposé entre le socle 10 formé par la plaque d'interface fixée au robot et le support 11 situé au-dessous. Il est configuré de façon à mesurer seulement un effort exercé par le support 11 sur le socle 10 dans une direction parallèle à l'axe Z-Z. Il s'agit de capteurs de type "poutre" comme illustré aux figures 12 et 13. Le principe de fonctionnement d'un tel capteur est très simple. Il mesure uniquement un effort F dans une direction (positif et négatif) tel que représenté sur la figure 13. Ce capteur a pour avantages d'être économique (il coute moins de 200 euros), de procurer une souplesse dans la conception en libérant tout le centre de l'électrobroche et d'avoir un encombrement minimaliste et une robustesse extrêmement bonne.

Les trois capteurs 90 s'étendent dans un même plan perpendiculaire à l'axe. Ils sont ici l'image l'un de l'autre par une rotation autour de l'axe d'angle 120° et sont donc distribués de manière homogène sur la périphérie de l'électrobroche.

Ici, on a prévu trois capteurs compte-tenu des dimensions de l'électrobroche, mais on aurait pu en prévoir 4, 5, 6 voire plus suivant les possibilités mécaniques.

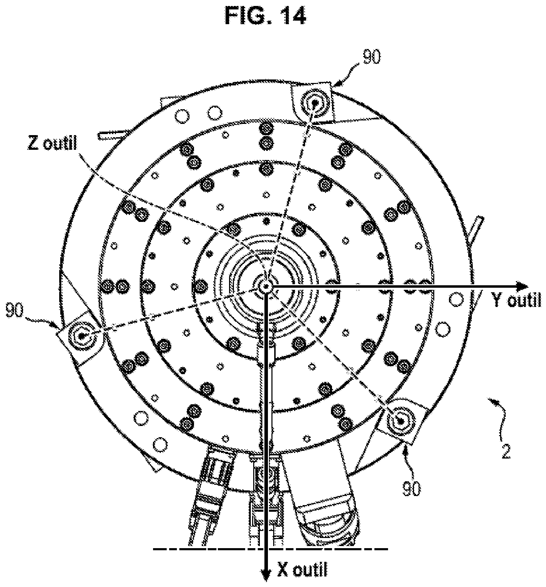

On considère le repère associé à l'outil 36. C'est dans ce repère que les efforts exercés sur l'outil durant l'utilisation de l'électrobroche doivent être calculés. En référence à la figure 14, avec le système des trois capteurs 90, on prend les hypothèses suivantes :

- angle de 120° parfait entre les trois capteurs ;

- les centres de mesure coïncident avec l'axe principal Z-Z ; et

- l'électrobroche est considérée comme infiniment rigide entre l'outil et les capteurs.

L'effort axial est donc la sommation des trois efforts mesurés par les capteurs, soit $Fz = F1 + F2 + F3$. Pour que la mesure soit cohérente, le système possède un degré de liberté de mouvement via la rotule précitée (centrage sur une ligne) entre le socle 10 et le support 11 qui évite un hyperstatisme trop prononcé qui empêcherait la déformation des capteurs. Cependant, en réalité, on n'a pas à ce stade une maitrise complète au niveau du centre de l'outil 36 car le centre du système des capteurs ne coïncide pas parfaitement avec le repère de l'outil (les capteurs étant notamment fixés par des vis dans le support 10, un jeu fonctionnel de montage étant nécessaire). On réalise donc juste une sommation de trois efforts sans repère exact donnant un résultat dans un certain niveau de précision mais pas optimale. De plus, les capteurs étant situés sur la partie haute de l'électrobroche, la perte de raideur de l'outil jusqu'aux capteurs n'est pas prise en considération.

Par ailleurs, on n'a pas la connaissance des efforts Fx et Fy. La connaissance des efforts Fx et Fy n'est pas obligatoire en FSW/SSFSW ou en usinage mais elle est intéressante pour plusieurs raisons. D'une part, ces deux efforts font travailler en cisaillement l'outil qui est dans la matière. Il faut donc qu'ils restent dans un domaine acceptable par rapport à l'outil choisi pour ne pas le casser en cours d'utilisation. D'autre part, cette connaissance permet de détecter en temps réel des surcharges anormales qui pourraient endommager l'électrobroche ou la machine. Par ailleurs, sur une variante du procédé SSFSW, nommée Corner SSFSW (soudage d'angle), ces deux efforts doivent être contrôlés comme l'effort Fz.

C'est pourquoi il est intéressant de procéder à une calibration de l'agencement à trois capteurs poutre 90 afin de connaître les efforts Fx, Fy et Fz dans le repère de l'outil. On pourrait, si on le souhaitait, ne réaliser cette calibration que pour un effort, ou deux, le système est dit multivariables et complètement généralisable (résolution d'un système d'optimisation). On illustre ici la situation sur une électrobroche avec trois capteurs mais une généralisation à « n capteurs » est possible.

La machine comprend ainsi des moyens de calcul comprenant au moins un ordinateur ou automate de calcul et aptes à calculer des efforts Fx, Fy et Fz s'exerçant sur l'outil 36 suivant la direction Z et dans deux directions X et Y perpendiculaires à l'axe en fonction des efforts F1, F2 et F3 mesurés par les capteurs 90 suivant la direction Z mais à distance de l'axe.

De la sorte, dans le procédé de pilotage de l'électrobroche lors de son utilisation pour le soudage ou l'usinage :

- on mesure à trois emplacements différents, c'est-à-dire dans les trois capteurs 90, les efforts respectifs F1, F2 et F3 exercés par le support 11 sur le socle 10 dans une direction parallèle à l'axe Z-Z, puis

- on calcule les efforts Fx, Fy et Fz exercés sur l'outil 36 suivant les directions X, Y et Z en fonction des efforts mesurés F1, F2 et F3.

Pour la calibration, en référence aux figures 16 à 19, l'installation comprend une base 92 et un capteur multiaxe 94 fixé rigidement à la base, sur celle-ci et apte à mesurer des efforts dans trois directions simultanément, ces trois directions formant un repère orthogonal. On ancre solidement le capteur 94 sur la base afin de pouvoir générer des efforts importants et d'avoir des amplitudes de mesure intéressantes. Ici on dispose d'un capteur 6 axes complet. C'est un gros avantage du système de calibration proposé, car il n'est pas nécessaire d'utiliser des systèmes de poulies pour mettre le système sous charges, ce qui rend le système extrêmement souple et précis dans un contexte d'implantation industrielle.

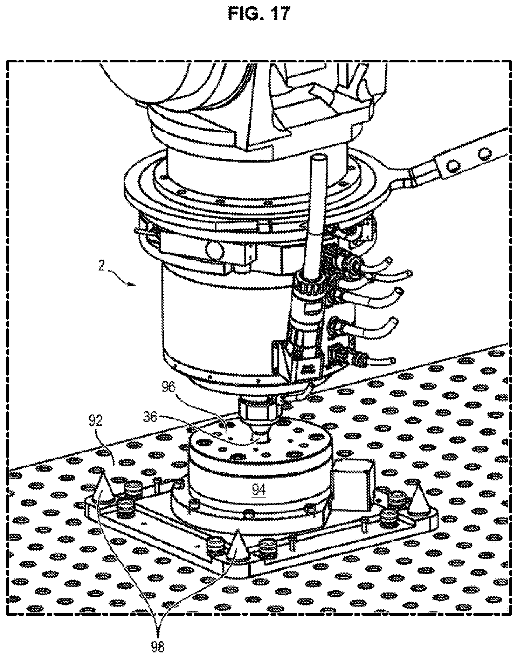

Pour ne pas dégrader le capteur d'effort, l'installation comprend aussi une platine d'interface 96 fixée rigidement sur le capteur multiaxe 94 et présentant un conduit de guidage central débouchant d'un côté supérieur de la platine d'interface opposé au capteur pour y insérer un outil de calibration comme sur la figure 17. Cet outil remplace l'outil de soudage ou d'usinage dans l'électrobroche durant la calibration.

La base comprend des pointes de calibration 98 permettant de dégauchir l'ensemble du capteur par rapport à l'électrobroche. Cela permet de procéder à un alignement des axes de mesure pour faire correspondre les mesures de la platine d'effort avec le repère outil du robot. L'important est de connaitre la transformation homogène entre les repères de mesures. On peut également utiliser des mires de vision, si on souhaite une précision accrue.

Au moyen de ces éléments, on met en œuvre le procédé de calibration préalable comme suit.

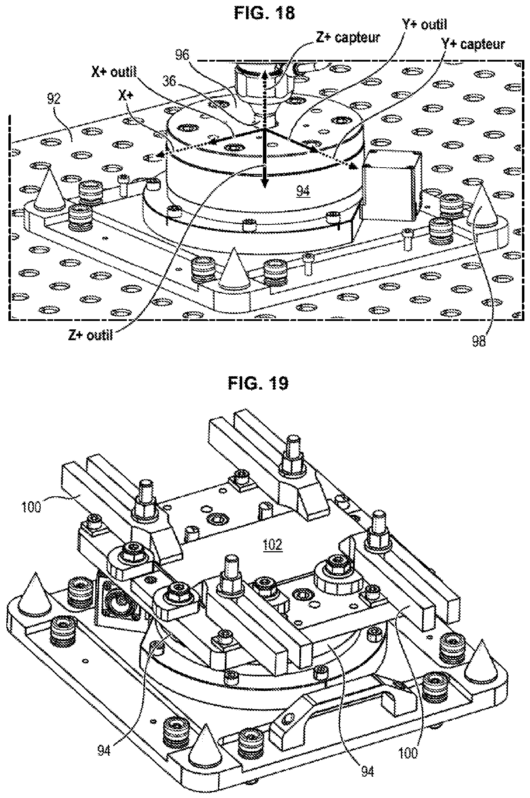

En référence à la figure 18, il y a deux repères importants :

- le repère du capteur d'effort 6 axes (en rouge) qui est fixe ; et

- le repère outil du robot.

L'objectif est d'avoir une coïncidence entre les deux repères. (En alternative, on peut disposer d'une transformation connue entre eux). L'avantage de cette méthode est qu'elle prend en compte les incertitudes de positionnement des trois capteurs poutre sur l'électrobroche et la perte de rigidité potentielle dans l'électrobroche et calibre l'ensemble par rapport au repère outil et à son centre.

Pour cela, tout d'abord, on équipe l'électrobroche 2 montée sur le robot 10 de l'outil de calibration. Cet outil de calibration peut se monter soit dans le porte-outil 34 en lieu et place de l'outil de soudage 36 en référence à la figure 6, soit au travers du porte-épaulement 60 en référence à la figure 8. Dans le premier cas, la charge va passer par les roulements de l'électrobroche, dans le second, elle va transiter directement par le corps 4 de l'électrobroche. Il s'agit d'un outil 36 analogue à l'outil servant au soudage mais de qualité moindre et d'une forme simplifiée avec un jeu réduit s'introduisant dans un conduit de guidage de la platine d'interface 96, ce qui permet la coïncidence précise des deux repères.

Au moyen du robot, on approche l'outil de chacune des trois pointes de calibration 98 successivement afin de faire coïncider dans les moyens de calcul le repère X, Y, Z de l'électrobroche, ayant son origine à l'extrémité libre de l'outil 36 avec le repère du capteur multiaxe 94 ayant son origine dans le conduit central. On peut ainsi superposer les deux repères dans les moyens de calcul comme illustré à la figure 18.

Ensuite, l'outil 36 étant logé dans le conduit du capteur 94, on déplace l'outil selon les directions XYZ de façon à générer des contacts entre l'outil 36 et le capteur 94 et produire des efforts de réaction de ce capteur contre l'outil. En effet, une fois l'outil inséré dans le centre de l'interface, on est en mesure par la génération de petits mouvements selon les directions du repère outil (ou du repère capteur) de mettre sous contraintes le système. La procédure de collection des données est donc extrêmement simplifiée, elle ne nécessite pas de système de poulies, ou l'utilisation de dynamomètres pour mettre sous contraintes et mesurer les efforts. La procédure doit permettre de réaliser différentes observations et de balayer un vaste champ d'efforts pour obtenir un conditionnement optimal du problème d'optimisation et trouver une solution pertinente au problème. Le résultat n'est autre qu'une matrice de calibration et reliant les deux systèmes de mesures d'effort.

Lors d'une observation, on mesure simultanément au moyen du capteur 94 les efforts Fx, Fy et Fz du capteur sur l'outil dans les trois directions. On mesure aussi les efforts F1, F2 et F3 vus par les capteurs 90 de l'électrobroche suivant la direction Z-Z. Il est nécessaire de réaliser un certain nombre d'observations (noté m par la suite) afin d'obtenir une précision optimale de la solution.

La mise en œuvre détaillée se déroule par exemple comme suit dans le cas de n capteurs de type poutre.

Supposons qu'on ait un jeu de données de m observations d'effort $\mathbf{F}_i = \begin{bmatrix} F_{x_i}, F_{y_i}, F_{z_i} \end{bmatrix}^T \in \mathbb{R}$ pour m conditions $\mathbf{x}_i = [F1_i, F2_i, .., Fn_i] \in \mathbb{R}, i = 1, .., m$. On aimerait approximer le vecteur $\mathbf{F}_i$ comme fonction de $\mathbf{x}_i = [F1_i, F2_i, .., Fn_i]$ (système surdéterminé dans le cas ou m>n, une solution unique n'existe pas, on approxime donc la résolution) :

$$\mathbf{F} \sim f(\mathbf{x}; \mathbf{c}) \quad (3.1)$$

où la fonction $f$ dépend linéairement de p=3xn coefficients $\mathbf{c} = [c_1, c_2, .., c_p]^T \in \mathbb{R}$. Le problème de régression consiste à déterminer les p coefficients $[c_1, .., c_p]$ qui minimiseront (dans un sens à préciser) la distance entre $\mathbf{F}$ et la prédiction f(x). D'un point de vue algébrique, le problème de régression se ré-écrit de la façon suivante, on aimerait trouver une solution à un système surdéterminé :

$$\mathbf{Wc} = \mathbf{F} \quad (3.2)$$

Où

- $\mathbf{W}$ est une matrice de dimensions (3m x 3n) et m > n qui dépend des données conditions $\mathbf{x}_i = [F1_i, F2_i, .., Fn_i] \in \mathbb{R}, i = 1, …, m$ ,

- $\mathbf{c}$ est le vecteur de coefficients inconnus de dimensions (3n x 1) et

- $\mathbf{F}$ est le vecteur de données observations de dimensions (3m x 1).

Le problème des moindres carrés revient à trouver le vecteur de coefficients $\mathbf{c}$ qui minimise la distance (euclidienne) qui sépare $\mathbf{Wc}$ de $\mathbf{F}$, c'est-à-dire trouver $\mathbf{c}$ qui minimise la norme euclidienne $\mathbf{F} - \mathbf{Wc}$. Nous détaillons ici la solution dans le cas de trois capteurs de type poutre, soit n=3. D'un point de vue pratique, on cherche à résoudre le problème suivant :

$$\mathbf{F_{OUTIL}} \sim \mathbf{MF_{CAPTEURS}} \Leftrightarrow \begin{bmatrix} F_x \\ F_y \\ F_z \end{bmatrix} \sim \begin{bmatrix} c_1 & c_2 & c_3 \\ c_4 & c_5 & c_6 \\ c_7 & c_8 & c_9 \end{bmatrix} \begin{bmatrix} F1 \\ F2 \\ F3 \end{bmatrix} \quad (3.3)$$

où :

- $\mathbf{F_{OUTIL}}$ le vecteur des efforts dans le repère outil (X, Y, Z) ;
- $\mathbf{M}$ la matrice de calibration contenant les valeurs du vecteur c ; et
- $\mathbf{F_{CAPTEURS}}$ le vecteur des efforts des capteurs poutre.

L'objectif consiste à déterminer « la meilleure » matrice de calibration $\mathbf{M}$ par la résolution d'un problème d'optimisation en réalisant m observations.

Pour m=4>3 observations, le problème de régression donné par l'équation (3.2) s'écrit :

$$\mathbf{Wc} = \mathbf{F} \Leftrightarrow \begin{bmatrix} F1_1 & F2_1 & F3_1 & 0 & 0 & 0 & 0 & 0 & 0 \\ 0 & 0 & 0 & F1_1 & F2_1 & F3_1 & 0 & 0 & 0 \\ 0 & 0 & 0 & 0 & 0 & 0 & F1_1 & F2_1 & F3_1 \\ F1_2 & F2_2 & F3_2 & 0 & 0 & 0 & 0 & 0 & 0 \\ 0 & 0 & 0 & F1_2 & F2_2 & F3_2 & 0 & 0 & 0 \\ 0 & 0 & 0 & 0 & 0 & 0 & F1_2 & F2_2 & F3_2 \\ F1_3 & F2_3 & F3_3 & 0 & 0 & 0 & 0 & 0 & 0 \\ 0 & 0 & 0 & F1_3 & F2_3 & F3_3 & 0 & 0 & 0 \\ 0 & 0 & 0 & 0 & 0 & 0 & F1_3 & F2_3 & F3_3 \\ F1_4 & F2_4 & F3_4 & 0 & 0 & 0 & 0 & 0 & 0 \\ 0 & 0 & 0 & F1_4 & F2_4 & F3_4 & 0 & 0 & 0 \\ 0 & 0 & 0 & 0 & 0 & 0 & F1_4 & F2_4 & F3_4 \end{bmatrix} \begin{bmatrix} c_1 \\ c_2 \\ c_3 \\ c_4 \\ c_5 \\ c_6 \\ c_7 \\ c_8 \\ c_9 \end{bmatrix} = \begin{bmatrix} F_{x1} \\ F_{y1} \\ F_{z1} \\ F_{x2} \\ F_{y2} \\ F_{z2} \\ F_{x3} \\ F_{y3} \\ F_{z3} \\ F_{x4} \\ F_{y4} \\ F_{z4} \end{bmatrix} \quad (3.4)$$

Le problème (3.4) est surdéterminé (12 équations pour 9 inconnues). La matrice $\mathbf{W}$ n'est pas carrée, et de dimension (12 x 9). Une solution unique n'existe pas, mais il existe une solution au sens des moindres carrées. Soit l'erreur quadratique suivante :

$$\varepsilon = (\mathbf{F} - \mathbf{Wc})^2 = \mathbf{c}^T\mathbf{W}^T\mathbf{Wc} - 2\mathbf{c}^T\mathbf{W}^T\mathbf{F} + \mathbf{F}^T\mathbf{F} \quad (3.5)$$

Le vecteur des inconnus c est obtenu par minimisation de l'équation (3.5). La fonction étant convexe, la solution est obtenue en résolvant la dérivation partielle suivante :

$$\frac{\partial \varepsilon}{\partial \mathbf{c}} = 2\mathbf{W}^T\mathbf{Wc} - 2\mathbf{W}^T\mathbf{F} = 0 \quad (3.6)$$

Le vecteur des solutions c est donné par :

$$\mathbf{c} = \mathbf{W}^+\mathbf{F} \quad (3.7)$$

où $\mathbf{W}^+ = (\mathbf{W}^T\mathbf{W})^{-1}\mathbf{W}^T$ est la pseudo-inverse ou inverse généralisée de $\mathbf{W}$. Elle correspond à une solution approximative du système linéaire (3.4) minimisant l'erreur quadratique $\varepsilon = (\mathbf{F} - \mathbf{Wc})^2$. La matrice de calibration $\mathbf{M}$ peut alors être mise en forme pour résoudre l'équation (3.3).

Afin d'obtenir une convergence du vecteur des solutions et avoir une calibration efficiente et robuste, il est nécessaire d'effectuer le plus d'observations m possible. Il apparait trivial que plus le nombre d'observations m est important, et plus l'équation (3.3) tend vers une exactitude et non une approximation. De même, il est trivial de dire que plus le nombre de capteurs poutre est important et plus la précision est accrue. La disposition du nombre de capteurs possible est fortement reliée à l'encombrement maximal autorisé. Pour obtenir un conditionnement du problème mathématique cohérent (conditionnement de la matrice $\mathbf{W}$), il est nécessaire de balayer un champ assez large des efforts au cours des différentes observations afin d'avoir le maximum de sensibilité sur les mesures.

En analyse, le conditionnement mesure la dépendance de la solution d'un problème numérique par rapport aux données, afin de contrôler la validité de la solution. En effet, les données dépendent en général de mesures expérimentales et sont donc entachées d'erreurs. La dépendance est le plus souvent une quantité numérique. De façon plus générale, le conditionnement est une mesure de la difficulté de calcul numérique du problème. Un problème possédant un conditionnement bas est dit bien conditionné et un problème possédant un conditionnement élevé est dit mal conditionné.

Exemple (calculs réalisés via le logiciel MATLAB) : On montre ici la pertinence de la méthode proposée en considérant le sous-système contenant uniquement Fz (les valeurs Fx et Fy pouvant être difficilement interprétables sans des essais réels mais le principe reste identique, l'exemple a pour but d'être illustratif). Le nombre de capteur poutre est de trois.

En effet, de par la disposition des capteurs sur l'électrobroche, le résultat doit être très proche d'une sommation unitaire pour Fz, soit Fz=F1+F2+F3. Nous allons ici montrer l'intérêt et la robustesse de la méthode par injection de bruit de mesure par la suite, et montrer que l'hypothèse n'est pas exacte.

En ne considérant que la 3$^{\text{ème}}$ ligne, l'équation (3.3) devient :

$$F_z = \begin{bmatrix} c_7 & c_8 & c_9 \end{bmatrix} \begin{bmatrix} F1 \\ F2 \\ F3 \end{bmatrix}$$

Pour m=5>3 observations, le problème de régression donné par l'équation (3.2) s'écrit donc :

$$Wc = F \iff \begin{bmatrix} F1_1 & F2_1 & F3_1 \\ F1_2 & F2_2 & F3_2 \\ F1_3 & F2_3 & F3_3 \\ F1_4 & F2_4 & F3_4 \\ F1_5 & F2_5 & F3_5 \end{bmatrix} \begin{bmatrix} c_7 \\ c_8 \\ c_9 \end{bmatrix} = \begin{bmatrix} F_{z1} \\ F_{z2} \\ F_{z3} \\ F_{z4} \\ F_{z5} \end{bmatrix}$$

Cas 1 : système parfait (capteurs à 120°, centre de mesure sur l'axe de l'électroche, sommation parfaite et unitaire). On note donc les essais suivants :

$$Wc = F \iff \begin{bmatrix} -2500 & -1500 & -1000 \\ -3500 & -2000 & -2000 \\ 1000 & -6000 & -7000 \\ 1500 & -8500 & 1000 \\ 1000 & -2000 & -2000 \end{bmatrix} \begin{bmatrix} c_7 \\ c_8 \\ c_9 \end{bmatrix} = \begin{bmatrix} -5000 \\ -7500 \\ -12000 \\ -6000 \\ -3000 \end{bmatrix}$$

On constate que ce système est surdéterminé, 5 équations pour 3 inconnus. Néanmoins, par rapport aux hypothèses, on constate que la solution c7=c8=c9=1 respecte le système.

En réalisant la résolution au fur et à mesure des observations, on obtient le vecteur de solution suivant :

Observation m=1 ➔ c7=1.316 / c8=0.7895 / c9=0.5263

Observation m=2 ➔ c7=1.226 / c8=0.6604 / c9=0.9434

Observation m=3/m=4/m=5 ➔ c7=1 / c8=1 / c9=1

Lorsque m<3, le système a moins d'équations que d'inconnues, plusieurs solutions sont possibles. Pour m=3, il y a une solution unique, système de 3 équations à 3 inconnues. Pour m>3, il y a plus d'équations que d'inconnues, le système est surdéterminé. Néanmoins on constate la convergence de la solution sur ce système parfait, qui correspond à la solution unique et parfaite. Le conditionnement de la matrice **W** est de 2.69 à la fin de l'optimisation, ce qui est très bon.

Cas 2 : système imparfait (capteurs pas parfaitement à 120°, bruit sur les mesures conduisant à une somme non unitaire). On note donc les essais suivants :

$$Wc = F \iff \begin{bmatrix} -2505 & -1498 & -995 \\ -3493 & -2008 & -2012 \\ 1004 & -6010 & -7009 \\ 1511 & -8504 & 1001 \\ 995 & -2010 & -2005 \end{bmatrix} \begin{bmatrix} c_7 \\ c_8 \\ c_9 \end{bmatrix} = \begin{bmatrix} -5003 \\ -7499 \\ -12011 \\ -5999 \\ -2998 \end{bmatrix}$$

En réalisant la résolution au fur et à mesure des observations, on obtient le vecteur de solution suivant :

Observation m=1 ➔ c7=1.318 / c8=0.7881 / c9=0.5235

Observation m=2 ➔ c7=1.226 / c8=0.6763 / c9=0.9245

Observation m=3 ➔ c7=0.9942 / c8=1.033 / c9=0.9706

Observation m=4 ➔ c7=0.9984 / c8=1 / c9=0.9987

## Observation m=5 ➜ c7=0.995 / c8=1 / c9=0.998

Le conditionnement final de **W** est de 2.682. On constate que la solution a convergé à partir de m=4 environ. On constate une solution très proche de 1, mais pas exactement car les bruits de mesure ont été pris en compte, montrant la robustesse de l'approche. Le résultat est donc plus précis.

En pratique, le résultat est donc plus robuste en calculant Fz (et par extension Fx et Fy) via l'optimisation car on prend en compte toutes les perturbations et imprécisions liées à l'environnement industriel (bruit de mesure, tolérances mécaniques, défaut de rigidité etc...).

Il est intéressant de vérifier la validité de la calibration obtenue par des tests de soudage ou d'usinage par exemple.

Pour cela, l'installation comprend en référence à la figure 19 des organes 100 de fixation rigide d'une plaque 102 en partie supérieure du capteur 94, la platine 96 ayant été ôtée éventuellement au préalable. La plaque 102 est une plaque de métal pouvant subir une opération analogue à celles prévues en production avec l'électrobroche.

Lors de la vérification, la plaque étant ainsi fixée au capteur, on réalise une ligne de friction-malaxage sur la plaque au moyen de l'électrobroche (ou en variante un usinage).

Durant l'étape de réalisation de la ligne, on mesure simultanément les efforts Fx, Fy, et Fz sur l'outil de friction-malaxage au moyen du capteur multiaxe 94 et les efforts F1, F2 et F3 vus par les trois capteurs 90 de l'électrobroche.

Puis on calcule des efforts Fx, Fy, et Fz exercés sur l'outil suivant les directions X, Y et Z en fonction des efforts F1, F2 et F3 des capteurs.

Enfin on compare les efforts F1, F2 et F3 mesurés sur l'outil et les efforts F1, F2 et F3 calculés, ce qui permet de déterminer si le système a été calibré correctement. Ainsi par correspondance entre les efforts mesurés dans le repère outil (résultat de la procédure d'optimisation) et les efforts mesurés par le capteur 6 axes, on est en mesure de vérifier la totalité de la méthode. On peut également faire des tests en cas de démontage de l'électrobroche ou vérifier si une dérive apparait dans le temps.

Cette méthode a aussi pour avantage de prendre en compte des problèmes éventuels de rigidité dans l'électrobroche par une mesure directe au niveau de l'outil lors de la calibration.

Le procédé pourra être utilisé de façon automatisée lors de l'utilisation de l'électrobroche pour la production et aussi lors de la calibration.

On pourra apporter à l'invention de nombreuses modifications sans sortir du cadre de celle-ci telle que définie dans les revendications ci-jointes.

## Revendications

**1.** Électrobroche (2) comprenant :

- un carter (4),
- une partie tournante (6) montée rotative par rapport au carter (4), la partie tournante (6) présentant un logement (14) de réception d'un porte-outil (16), - un porte outil (16) reçu dans le logement (14),
**caractérisée par** :
- -la partie tournante (6) comprenant au moins un connecteur (26) agencé sur une face externe (24) de la partie tournante (6) et configuré pour la réception d'un signal, et
- des moyens de transmission sans fil (28, 30) entre la partie tournante (6) et le carter (4) du signal venant du connecteur (26),
- le porte-outil (16) comprenant un thermocouple (38) connecté au connecteur (26).

**2.** Electrobroche selon la revendication précédente dans laquelle les connecteurs (26) sont au nombre de deux, les connecteurs étant notamment disposés symétriquement par référence à un axe principal (Z-Z) de la partie tournante (6).

**3.** Electrobroche selon l'une des revendications précédentes dans laquelle les moyens de transmissions sans fil (28, 30) ont une forme annulaire.

**4.** Electrobroche selon l'une des revendications précédentes dans laquelle le ou chaque connecteur (26) est équipé d'un ressort à lame.

**5.** Electrobroche selon l'une des revendications précédentes dans laquelle les moyens de transmission comprennent un élément (28) rigidement solidaire de la partie tournante (6) et situé plus près d'une première extrémité axiale de la partie tournante opposée au logement (14) que d'une deuxième extrémité axiale de la partie tournante présentant le logement.

6. Electrobroche selon l'une des revendications précédentes dans laquelle les moyens de transmission comprennent :

   - un élément fixe (30) rigidement solidaire du carter,
   - un élément tournant (28) rigidement solidaire de la partie tournante (6), et
   - des moyens d'alimentation par induction de l'élément tournant.

7. Electrobroche selon l'une des revendications précédentes qui comprend un outil (36) et un mandrin (34) portant le thermocouple (38) et vissé dans une cavité (50) de l'outil.

8. Electrobroche selon l'une des revendications 6 et 7 dans laquelle le thermocouple (38) s'étend dans un conduit (54) de l'outil présentant un diamètre inférieur à un plus petit diamètre de la cavité (50).

9. Electrobroche selon la revendication 8 dans laquelle le conduit (54) débouche à l'extérieur de l'électrobroche.

10. Electrobroche selon la revendication 8 dans laquelle le conduit (54) est non débouchant.

11. Electrobroche selon l'une des revendications 1 à 10 dans laquelle le thermocouple (38) présente un diamètre inférieur ou égal à 3 mm et de préférence inférieur ou égal à 0,5 mm.

12. Electrobroche selon l'une des revendications précédentes dans laquelle le porte-outil (16) comprend un corps principal et un pion formant une partie externe de l'outil distincte du corps.

13. Electrobroche selon l'une des revendications précédentes formant une électrobroche de soudage par friction-malaxage, par exemple comprenant un épaulement externe monté fixe par rapport au carter (4) ou dépourvue d'épaulement externe monté fixe par rapport au carter.

14. Machine comprenant une électrobroche selon au moins l'une des revendications précédentes.


**Patentansprüche**

1. Elektrospindel (2), umfassend:

   - ein Gehäuse (4),
   - einen Drehteil (6), der relativ zum Gehäuse (4) rotatorisch gelagert ist, wobei der Drehteil eine Empfangsaufnahme (14) für einen Werkzeughalter (16) aufweist,
   - einen Werkzeughalter (16), der in der Aufnahme (14) aufgenommen ist,
   **dadurch gekennzeichnet, dass**
   - der Drehteil (6) mindestens einen Verbinder (26) umfasst, der an einer Außenfläche (24) des Drehteils (6) eingerichtet und zum Empfang eines Signals ausgelegt ist, und
   - Mittel zur drahtlosen Übertragung (28, 30) des vom Verbinder (26) kommenden Signals zwischen dem Drehteil (6) und dem Gehäuse (4),

   wobei der Werkzeughalter (16) ein Thermoelement (38) umfasst, das an den Verbinder (26) angeschlossen ist.

2. Elektrospindel nach vorstehendem Anspruch, wobei die Verbinder (26) zwei in der Anzahl sind, wobei die Verbinder insbesondere symmetrisch in Bezug auf eine Hauptachse (Z-Z) des Drehteils (6) angeordnet sind.

3. Elektrospindel nach einem der vorstehenden Ansprüche, wobei die Mittel zur drahtlosen Übertragung (28, 30) eine ringförmige Gestalt aufweisen.

4. Elektrospindel nach einem der vorstehenden Ansprüche, wobei der oder jeder Verbinder (26) mit einer Blattfeder ausgestattet ist.

5. Elektrospindel nach einem der vorstehenden Ansprüche, wobei die Übertragungsmittel ein Element (28) umfassen, das starr mit dem Drehteil (6) verbunden ist und sich näher an einem ersten axialen Ende des Drehteils gegenüber der Aufnahme (14) befindet als an einem zweiten axialen Ende des Drehteils, das die Aufnahme darstellt.

6. Elektrospindel nach einem der vorstehenden Ansprüche, wobei die Übertragungsmittel umfassen:

   - ein feststehendes Element (30), das starr mit dem Gehäuse verbunden ist,
   - ein Drehelement (28), das starr mit dem Drehteil (6) verbunden ist, und
   - Versorgungsmittel durch Induktion des Drehbelements.

7. Elektrospindel nach einem der vorstehenden Ansprüche, die ein Werkzeug (36) und ein Spannfutter (34) umfasst, das das Thermoelement (38) trägt und in einen Hohlraum (50) des Werkzeugs eingeschraubt ist.

8. Elektrospindel nach einem der Ansprüche 6 und 7, wobei sich das Thermoelement (38) in einer Führung (54) des Werkzeugs erstreckt, die einen Durchmesser aufweist, der kleiner als ein kleinerer Durchmesser des Hohlraums (50) ist.

9. Elektrospindel nach Anspruch 8, wobei die Führung (54) aus der Elektrospindel ausmündet.

10. Elektrospindel nach Anspruch 9, wobei die Führung (54) nicht ausmündet.

11. Elektrospindel nach einem der Ansprüche 1 bis 10, wobei das Thermoelement (38) einen Durchmesser von weniger als oder gleich 3 mm und vorzugsweise weniger als oder gleich 0,5 mm aufweist.

12. Elektrospindel nach einem der vorstehenden Ansprüche, wobei der Werkzeughalter (16) einen Hauptkörper und einen Stift umfasst, der einen vom Körper unterschiedlichen äußeren Teil des Werkzeugs bildet.

13. Elektrospindel nach einem der vorstehenden Ansprüche, die eine Rührreibschweiß-Elektrospindel bildet, beispielsweise mit einer relativ zum Gehäuse (4) feststehend angebrachten Außenschulter oder ohne relativ zum Gehäuse feststehend angebrachten Außenschulter.

14. Maschine, die eine Elektrospindel nach mindestens einem der vorstehenden Ansprüche umfasst.


**Claims**

1. Electric spindle (2) comprising:

   - a casing (4),
   - a rotating part (6) mounted so as to rotate relative to the casing (4), the rotating part (6) having a housing (14) for receiving a tool holder (16),
   - a tool holder (16) received in the housing (14),

   **characterised by**:

   - the rotating part (6) comprising at least a connector (26) arranged on an external face (24) of the rotating part (6) and configured to receive a signal, and
   - means (28, 30) for wireless transmission of the signal coming from the connector (26) between the rotating part (6) and the housing (4),
   - the tool holder (16) comprising a thermocouple (38) connected to the connector (26).

2. Electric spindle according to the previous claim, wherein there are two connectors (26), the connectors being arranged symmetrically with respect to a main axis (Z-Z) of the rotating part (6).

3. Electric spindle according to one of the preceding claims, wherein the wireless transmission means (28, 30) are annular in shape.

4. Electric spindle according to one of the preceding claims, wherein the or each connector (26) is equipped with a leaf spring.

5. Electric spindle according to one of the preceding claims, wherein the transmission means comprise an element (28) rigidly connected to the rotating part (6) and located closer to a first axial end of the rotating part opposite the housing (14) than to a second axial end of the rotating part having the housing.

6. Electric spindle according to one of the preceding claims, wherein the transmission means comprise:

   - a fixed element (30) rigidly secured to the housing,
   - a rotating element (28) rigidly secured to the rotating part (6), and
   - means for supplying power to the rotating element by induction.

7. Electric spindle according to one of the preceding claims, comprising a tool (36) and a chuck (34) carrying the thermocouple (38) and screwed into a cavity (50) in the tool.

8. Electric spindle according to one of claims 6 and 7, wherein the thermocouple (38) extends into a conduit (54) in the tool having a diameter smaller than the smallest diameter of the cavity (50).

9. Electric spindle according to claim 8, wherein the conduit (54) opens to the outside of the electric spindle.

10. Electric spindle according to claim 8, wherein the conduit (54) is non-opening.

11. Electric spindle according to one of claims 1 to 10, wherein the thermocouple (38) has a diameter less than or equal to 3 mm and preferably less than or equal to 0.5 mm.

12. Electric spindle according to one of the preceding claims, wherein the tool holder (16) comprises a main body and a pin forming an external part of the tool distinct from the body.

13. Electric spindle according to one of the preceding claims forming a friction stir welding electric spindle, for example comprising an external shoulder mounted fixedly relative to the casing (4) or lacking an external shoulder mounted fixedly relative to the casing.

14. Machine comprising an electric spindle according to at least one of the preceding claims.

## FIG. 1

## FIG. 2

**FIG. 3**

**FIG. 4**

## FIG. 5

## FIG. 6

# FIG. 7

36    54

FIG. 8

# FIG. 9

**FIG. 10**

**FIG. 11**

FIG. 12

90

FIG. 13

F

90

## FIG. 14

# FIG. 15

Y outil

Z outil

FIG. 16

FIG. 17

EP 4 327 059 B1

## FIG. 18

## FIG. 19

30

# FIG. 20

**RÉFÉRENCES CITÉES DANS LA DESCRIPTION**

**Documents brevets cités dans la description**

- WO 9310935 A
- FR 3045426
- JP 2019042761 A
- CN 204109152